# EUROPEAN PATENT APPLICATION

(11) **EP 4 708 079 A1**
(43) Date of publication of application: **11.03.2026**
(21) Application number: 24843268.4
(22) Date of filing: 16.05.2024
(51) Int. Cl.: G06F 16/55, G06F 16/51, G06F 16/583, G06V 10/25, G06V 10/50

(54) **ELECTRONIC DEVICE AND METHOD FOR DISPLAYING IMAGE OR VIDEO, AND COMPUTER-READABLE MEDIUM**

(30) Priority: 20.07.2023 KR 20230094936
(71) Applicant: Samsung Electronics Co., Ltd., Suwon-si, Gyeonggi-do 16677 (KR)
(72) Inventor: LEE, Heekuk, Suwon-si, Gyeonggi-do 16677 (KR); KIM, Kyuwon, Suwon-si, Gyeonggi-do 16677 (KR); KIM, Jongkyu, Suwon-si, Gyeonggi-do 16677 (KR); KIM, Hyunsoo, Suwon-si, Gyeonggi-do 16677 (KR); YANG, Chulju, Suwon-si, Gyeonggi-do 16677 (KR)
(74) Representative: HGF
(86) International application number: PCT/KR2024/006684
(87) International publication number: WO 2025/018545

(57) **Abstract**

In embodiments, an electronic device is provided. The electronic device may comprise: a memory for storing instructions; one or more processors; and a display. When executed by the one or more processors, the instructions can cause the electronic device to: acquire a second image on the basis of image processing on a first image; acquire one or more regions of interest (ROIs) on the basis of one or more objects included in the first image; and display a first portion of the first image and a second portion of the second image through the display on the basis of a first ROI from among the one or more ROIs.

## Description

### [Technical Field]

The present disclosure relates to an electronic device, a method, and a computer-readable medium for displaying an image or a video.

### [Background Art]

An electronic device may obtain an image through a camera. The electronic device may obtain an image by its own factor, such as a sensor, a display, or communication. An image quality of the image may be deteriorated by an internal factor and/or an external factor, such as camera movement, lighting, humidity, a sensor temperature, data compression, and the like. The electronic device may perform a processing on the obtained image to display an image of improved quality. The electronic device may display the processed image through the display.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

In embodiments, an electronic device is provided. The electronic device may include memory storing instructions, at least one processor, and a display. The instructions may cause, when executed by the at least one processor, the electronic device to obtain a second image based on an image processing on a first image. The instructions may cause, when executed by the at least one processor, the electronic device to obtain a plurality of regions of interest (ROIs) of the first image. The instructions may cause, when executed by the at least one processor, the electronic device to identify a first ROI among the plurality of ROIs based on an arrangement for the plurality of ROIs. The instructions may cause, when executed by the at least one processor, the electronic device to display, through the display, a first portion of the first image and a second portion of the second image based on the first ROI among the plurality of ROIs.

In embodiments, a non-transitory computer-readable medium is provided. The non-transitory computer-readable medium may include a memory storing the instructions. The instructions may cause, when executed by at least one processor, an electronic device to obtain a second image based on an image processing on a first image, obtain a plurality of regions of interest (ROIs) based on the first image, identify a first ROI among the plurality of ROIs based on an arrangement for the plurality of ROIs, and display, through the display, a first portion of the first image and a second portion of the second image based on the first ROI among the plurality of ROIs.

In embodiments, a method performed by an electronic device is provided. The method may include obtaining a second image based on an image processing on a first image. The method may include obtaining a plurality of regions of interest (ROIs) based on one or more objects included in the first image. The method may include identifying a first ROI among the plurality of ROIs based on an arrangement for the plurality of ROIs. The method may include displaying, through a display, a first portion of the first image and a second portion of the second image based on the first ROI among the plurality of ROIs.

### [Description of the Drawings]

FIG. 1 is a block diagram of an electronic device in a network environment.
FIG. 2 indicates components of an electronic device.
FIG. 3 indicates an example of an image processing.
FIG. 4 indicates an operation flow of an electronic device for displaying a result of an image processing based on a region of interest.
FIG. 5 indicates examples of an object extraction.
FIGS. 6A to 6E indicate examples of obtaining of a region of interest.
FIG. 7A indicates an operation flow of an electronic device for displaying regions of interest.
FIGS. 7B and 7C indicate examples of a user interface of an electronic device for displaying regions of interest.
FIGS. 8A to 8D indicate examples of an arrangement of a region of interest.
FIG. 9 indicates examples of a change in a display region.
FIGS. 10A to 10B indicate an example of filtering of a region of interest.
FIGS. 11A to 11D indicate examples of coupling of regions of interest.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term (e.g., signal, information, message, or signaling) referring to a signal, a term (e.g., portion, image portion, image region, or region of interest) referring to a region in an image, a term (e.g., image remaster, remastering, image conversion, resolution conversion, image improvement, color sense correction, color correction, brightness correction, contrast adjustment, noise removal, lens distortion correction, face correction, moire removal, or face correction) referring to an image processing, a term (e.g., step, operation, or procedure) for an operation state, a term referring to network entities, a term referring to a component of a device, and the like, which are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

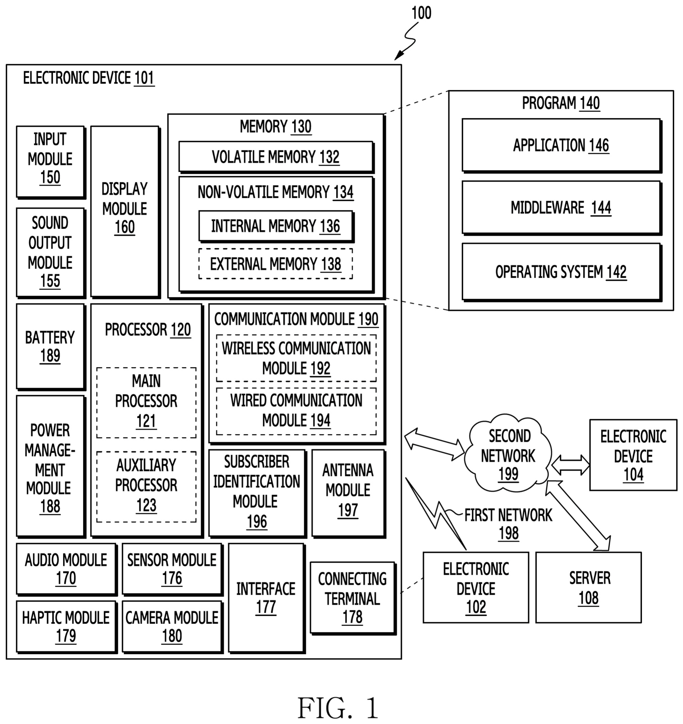

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

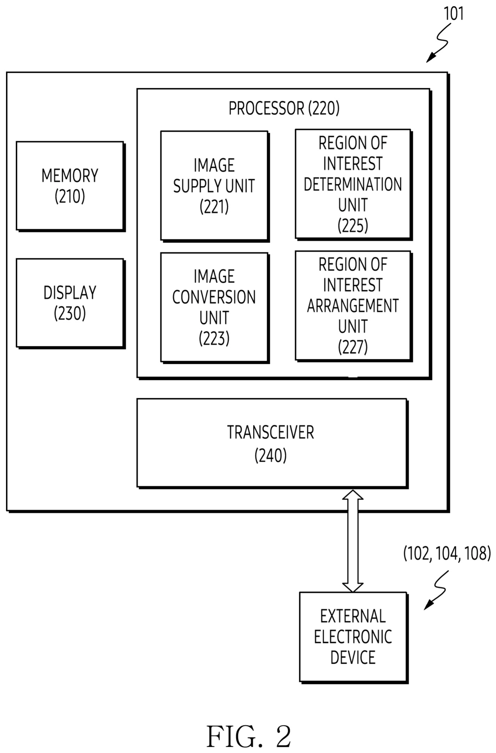

FIG. 2 indicates components of an electronic device (e.g., the electronic device 101 of FIG. 1).

Referring to FIG. 2, an electronic device 101 may include memory 210 (e.g., the memory 130 of FIG. 1), a processor 220 (e.g., the processor 120 of FIG. 1), a display 230 (e.g., the display module 160 of FIG. 1), and a transceiver (the communication module 190 of FIG. 1). According to an embodiment, the memory 210 may store data such as instructions, a basic program, an application program, and setting information for an operation of the electronic device 101. The memory 210 may be configured with volatile memory, non-volatile memory, or a combination of the volatile memory and the non-volatile memory. The memory 210 may store at least one image. The memory 210 may provide the stored image according to a request of the processor 220. The memory 210 may include information on an application for managing the at least one image.

According to an embodiment, the processor 220 may control overall operations of the electronic device 101. The processor 220 may obtain an image from the memory 210. The processor 220 may perform an image processing. The processor 220 may extract a region of interest of an image. The processor 220 may perform an arrangement for ROIs. The processor 220 may control the display 230 to display a portion of an image of the ROI. The processor 220 may control a transceiver 240 to transmit information on an image (e.g., an image, a result of the image processing, information on an ROI) to an external electronic device or to receive it from the external electronic device. According to an embodiment, the processor 220 may include an image supply unit 221 for providing an image, an image conversion unit 223 for the image processing, an ROI determination unit 225 for obtaining an ROI from an image, and an ROI arrangement unit 227 for determining an order for the ROIs. According to an embodiment, the image supply unit 221, the image conversion unit 223, the ROI determination unit 225, and the ROI arrangement unit 227 are a stored command set or code, and may be a command/code at least temporarily resided in the processor 220 or may be a storage space in which the command/code is stored, or may be a portion of circuitry constituting a control unit 240. According to an embodiment of the present disclosure, at least one of the image supply unit 221, the ROI determination unit 225, the image conversion unit 223, and the ROI arrangement unit 227 may be logically divided and operated in the processor 220, or may be generated and operated as at least one separate processor physically separated from the processor 220.

According to an embodiment, the display 230 may visually provide an external (e.g., a user) with an image according to the control of the processor 220. For example, the image data may include at least one piece of information (e.g., a color and luminance) of each pixel. As pixels are driven based at least in portion on a voltage value or a current value, visual information (e.g., text, a picture, or an icon) corresponding to the image data may be displayed through the display 230. The display 230 may display an image according to the result of the image processing. For example, the display 230 may display the image by changing saturation, brightness, and/or the color according to the image processing. According to an embodiment, the display 230 may display the ROI. The display 230 may include a user interface (UI) for displaying the result of the image processing based on the ROI.

According to an embodiment, the transceiver 240 may perform functions for transmitting and receiving a signal through a wireless channel. For example, when transmitting data, the transceiver 240 generates transmission symbols having a size and a phase by encoding and modulating a transmission bit stream. In addition, when receiving data, the transceiver 240 restores a reception bit stream by demodulating and decoding a baseband signal. The transceiver 240 may perform communication with an external electronic device (e.g., the electronic device 102, the electronic device 104, and the server 108 of FIG. 1). According to an embodiment, the transceiver 240 may include a communication module for supporting a wireless access technology. For example, the wireless access technology may include Bluetooth low energy (BLE), Wireless Fidelity (Wi-Fi), WiFi Gigabyte (WiGig), or a cellular network (e.g., a long term evolution (LTE), a 5G new radio (NR), and the like). Since the transceiver 240 transmits and receives a signal, it may be referred to as a 'transmission unit', a 'reception unit', or a 'transmission/reception unit'. In addition, in the following description, the transmission and the reception performed through the wireless channel may be used to mean of including that the processing as described above is performed by the transceiver 240. The transceiver 240 may transmit the ROI and the result of the image processing to the external electronic device. The external electronic device may display an image and/or the ROI according to the result of the image processing.

According to an embodiment, an image processing technology may improve an original image based on various algorithms (e.g., an artificial intelligence algorithm). For example, the image processing technology using an artificial intelligence (AI) technology performs the image processing based on a machine learning and a deep learning algorithm. The algorithms may improve a quality of an image by learning how a computer understands and analyzes the image, and checking a feature and a pattern of the image. The image processing technology using a result of the learning may generate a realistic and beautiful image, improve a resolution of an image, and express detailed details clearly by improving details in the image, removing noise, and optimizing a color and contrast. In addition, for example, the image processing technology may improve an actual shot scene and improve reality and immersion by widely being used in the film and video game industries. In addition, for example, the image processing technology may help doctors make an accurate diagnose even in a field of medical imaging. Hereinafter, in the present disclosure, a technology for effectively displaying an improved image to a user through the above-described image processing technology is described.

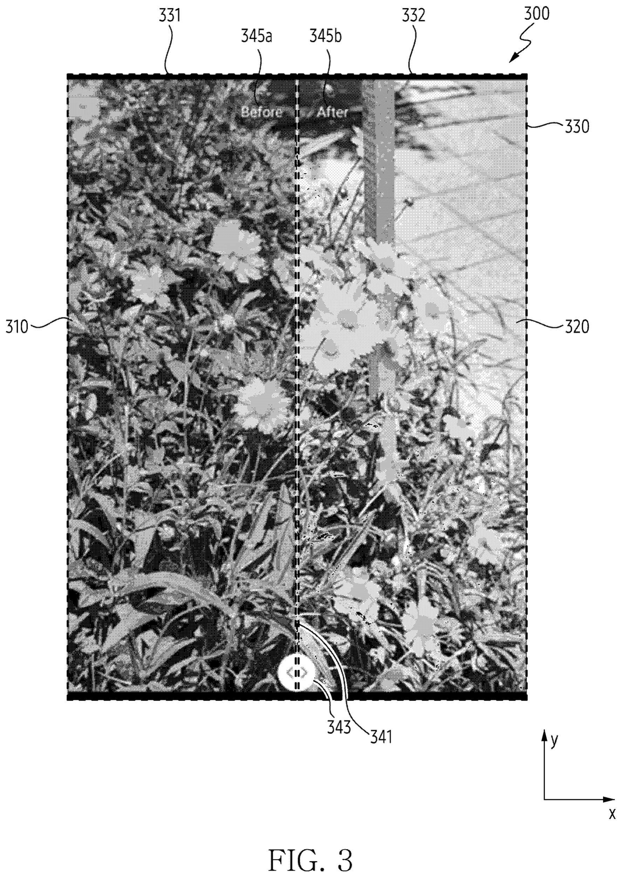

FIG. 3 indicates an example of an image processing. The image processing may be performed by an electronic device (e.g., the electronic device 101 of FIG. 1). A first image may be converted into a second image through the image processing. According to an embodiment, the image processing includes a function of correcting the first image to provide a better image to a user. For example, the image processing may increase a resolution of the first image. In the image processing, the resolution of the first image may be increased, and values for added pixels having a changed resolution may be set based on an AI algorithm. For example, the image processing may include brightness and a color adjustment to increase sharpness of the first image. For example, the image processing may include reflected light removal, foreign substances removal, and/or a correction of shaking, in the first image. For example, the image processing may include shadow removal. For example, the image processing may be referred to as image remaster, image conversion, image improvement, image correction, upscaling, resolution conversion, color correction, and/or a term having an equivalent technical meaning thereto.

Referring to FIG. 3, an electronic device 101 may perform the image processing on the first image. According to an embodiment, the electronic device 101 may display a result 300 of the image processing. For example, the electronic device 101 may obtain the second image based on the image processing on the first image. The electronic device 101 may display a first portion 310 of the first image and a second portion 320 of the second image. According to an embodiment, the electronic device 101 may identify a first region 331 and a second region 332 among an image region 330. The image region 330 means an entire region indicated by the first image and the second image. According to an embodiment, the image region 330 may include the entire region (e.g., an absolute region) displayed through a display. For example, the image region 330 for the first image may include the entire region (e.g., the absolute region) in which the first image is actually displayed on the display. The image region 330 for the second image may include the entire region (e.g., the absolute region) in which the second image is actually displayed on the display. For example, the image region 330 for the first image is the same as the image region 330 for the second image. The electronic device 101 may identify the first region 331 in which the first portion 310 of the first image is to be displayed. For example, the first region 331 may correspond to a left side of a dividing line (e.g., a dividing line 341) in the image region 330. The electronic device 101 may identify the second region 332 in which the second portion 320 of the second image is to be displayed. For example, the second region 332 may correspond to a right side of the dividing line (e.g., the dividing line 341) in the image region 330. According to an embodiment, the first region 331 and the second region 332 may not overlap.

According to an embodiment, the electronic device 101 may display the dividing line 341 and a visual object 343 for the dividing line 341 such that the user may more easily identify the improvement effect of the image processing. The electronic device 101 may display the first portion 310 of the first image and the second portion 320 of the second image together with the dividing line 341. For example, the electronic device 101 may display a first identifier 345a (e.g., 'Before' text) for identification on the first portion 310 of the first image and a second identifier 345b (e.g., 'After' text) on the second portion 320 of the second image to indicate a result of the image processing. In FIG. 3, the text is illustrated as an example of the first identifier 345a and the second identifier 345b, but embodiments of the present disclosure are not limited thereto. According to an embodiment, the first identifier 345a and/or the second identifier 345b are not limited to the text, and may be generated as various types of objects. For example, the first identifier 345a and/or the second identifier 345b may be implemented in various forms such as an image, an icon, and a symbol.

According to an embodiment, the dividing line 341 may be disposed between the first portion 310 of the first image and the second portion 320 of the second image. When receiving an input (e.g., a zoom-in input) of the user for enlarging the first image and the second image, the electronic device 101 may display a specific region enlarged for at least a portion of the image region 330. The electronic device 101 may divide the enlarged specific region into a first enlarged region and a second enlarged region with respect to the dividing line 341. The electronic device 101 may display a portion of the first image corresponding to the first enlarged region. The electronic device 101 may display a portion of the second image corresponding to the second enlarged region. The user may effectively check the result of the image processing through the enlargement of the image.

According to an embodiment, the electronic device 101 may further display the visual object 343 on the dividing line 341. According to an embodiment, the visual object 343 may be used to adjust a position of the dividing line 341. For example, the electronic device 101 may receive a user input (e.g., a drag input) for moving the visual object 343 in a direction (e.g., a (-)x-axis direction). The electronic device 101 may move the position of the dividing line 341 in the direction (e.g., the (-)x-axis direction) based on the user input. Although not illustrated in FIG. 3, as the dividing line 341 moves, the first region 331 may be narrowed and the second region 332 may be widened. The first portion 310 of the first image may become smaller, and the second portion 320 of the second image may become larger. According to the user input, the second image improved according to the image processing may be displayed more widely. For example, the electronic device 101 may receive a user input (e.g., a drag input) for moving the visual object 343 in another direction (e.g., a (+)x-axis direction). The electronic device 101 may move the position of the dividing line 341 in the other direction (e.g., the (+)x-axis direction) based on the user input. Although not illustrated in FIG. 3, according to the movement of the dividing line 341, the first region 331 may be widened and the second region 332 may be narrowed. The first portion 310 of the first image may become larger and the second portion 320 of the second image may become narrower. According to the user input, the first image, which is an original image, may be displayed more widely.

According to an embodiment, a plurality of methods may be used to display the result of according to the image processing. For example, as illustrated in FIG. 3, the electronic device 101 may display the first image before the image processing and the second image after the image processing together with respect to the dividing line 341. Through the movement of the dividing line 341, it may easily compare the first image and the second image to the user. However, when the image processing is performed locally rather than in a full tone, it is generally not easy for the user to know in which region the image processing has been performed. For example, in a frequency-changing correction, such as noise removal or upscaling, it is difficult for the user to determine whether or how much the enlargement is needed with a naked eye. In order to more effectively show the result of the image processing, the electronic device 101 according to embodiments of the present disclosure may extract one or more regions of interest (ROI) for automatically performing or guiding the enlargement and the movement. In addition, the electronic device 101 according to embodiments of the present disclosure may perform an arrangement for the extracted ROIs.

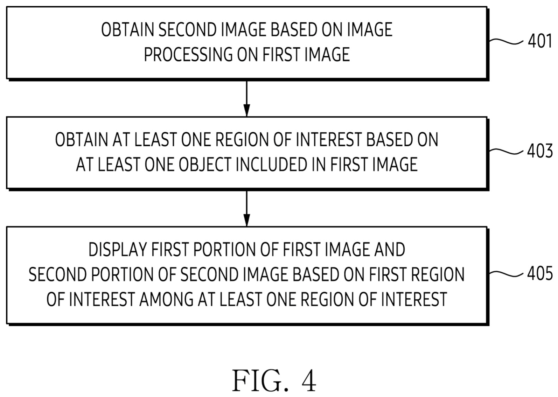

FIG. 4 indicates an operation flow of an electronic device (e.g., the electronic device 101 of FIG. 1) for displaying a result of an image processing based on a region of interest.

Referring to FIG. 4, in operation 401, an electronic device 101 (e.g., the processor 220 of FIG. 2) may obtain a second image based on the image processing on a first image. The first image may be an original image. For example, the first image may be an image obtained through a camera (e.g., the camera module 180 of FIG. 1) of the electronic device 101. For example, the first image may be an image obtained from an external electronic device (e.g., the electronic device 102, the electronic device 104, or the server 108 of FIG. 1). According to an embodiment, the first image may include a single image, a graphics interchange format (GIF) including a plurality of images, and/or a video. According to an embodiment, the second image may be a result of the image processing performed on the first image. The second image may include the single image, the GIF, and/or the video. According to an embodiment, the image processing includes a function of correcting the first image to provide a better image to a user. For example, the image processing may include image quality of the first image, image quality of an original video, distortion, a shadow, a reflection region, a correction of red-eye region, detail enhancement of moon or a person, saturation and a color conversion, and/or a style conversion.

In operation 403, the electronic device 101 (e.g., the processor 220 of FIG. 2) may obtain at least one ROI based on at least one object included in the first image. The electronic device 101 may identify the at least one object based on the first image. The electronic device 101 may extract an object for the first image. For example, the electronic device 101 may identify the at least one object included in the first image based on object detection. For example, the electronic device 101 may identify the at least one object included in the first image based on image recognition. For example, the electronic device 101 may identify the at least one object included in the first image based on semantic segmentation. For example, the electronic device 101 may identify the at least one object included in the first image based on instance segmentation. The electronic device 101 may obtain the one or more ROIs based on the at least one object. For example, the electronic device 101 may set the region including the object as the ROI. For example, the electronic device 101 may set a region including both a region including an object and a region having a pixel difference greater than or equal to a threshold value between the first image and the second image as the ROI.

In FIG. 4, an example in which the ROI is obtained based on the object has been described, but embodiments of the present disclosure are not limited thereto. The electronic device 101 may obtain the ROI based on a factor other than the at least one objects. According to an embodiment, the electronic device 101 may set the region in which the image processing in the operation 401 has been performed as the ROI. According to an embodiment, the electronic device 101 may set another region except for a background region as the ROI. According to an embodiment, the electronic device 101 may obtain the ROI based on a ROI selection history of the user. According to an embodiment, the electronic device 101 may identify a time interval during which a difference according to the result of the image processing is greater than the threshold value in the video, and set a region changed by the image processing in frames of the time interval as the ROI. According to an embodiment, the electronic device 101 may obtain the ROI based on personalized information (e.g., a preference preset in a user account, a frequency of each object among images stored in the electronic device 101) on the user in the electronic device 101. For example, the electronic device 101 may analyze an image using a specific algorithm (e.g., an artificial intelligence algorithm) and automatically set at least one ROI for the image based on the analyzed result.

In operation 405, the electronic device 101 may display a first portion of the first image and a second portion of the second image based on a first ROI among at least one ROIs. The at least one ROIs may include a plurality of regions of interest. The electronic device 101 may perform an arrangement for the plurality of ROIs. The electronic device 101 may perform the arrangement for the plurality of ROIs such that the user may easily search for each ROI or search for the ROI in an order meaningful to the user. For example, the electronic device 101 may perform the arrangement for the plurality of ROIs according to a designated direction (e.g., a (+)x-axis direction and a clockwise direction) in an image region. For example, the electronic device 101 may perform the arrangement for the plurality of ROIs in a descending order of a difference degree between the first image and the second image. For example, the electronic device 101 may perform the arrangement for the plurality of ROIs based on the personalized information (e.g., the preference preset in the user account, the frequency of each object among the images stored in the electronic device 101). For example, the electronic device 101 may perform the arrangement for the plurality of ROIs based on a shortest path algorithm.

The electronic device 101 may identify the first ROI among the at least one ROIs. For example, the electronic device 101 may identify the ROI having a highest priority as the first ROI based on a result of the arrangement. The electronic device 101 may automatically identify the first ROI after performing the image processing. For example, the electronic device 101 may identify the first ROI based on a user input. The user input may be an input for selecting the first ROI among the plurality of ROIs. The electronic device 101 may identify the first region (e.g., the first region 331 of FIG. 3) and the second region (e.g., the second region 332 of FIG. 3) of the image region (e.g., the image region 330 of FIG. 3) based on the first ROI. The first region indicates a region to be displayed on a screen among an image region of the first image. The second region indicates a region to be displayed on the screen among an image region of the second image.

According to an embodiment, the electronic device 101 may display the first ROI. The electronic device 101 may use various display methods such that the first ROI is more effectively revealed to the user. According to an embodiment, the electronic device 101 may enlarge the first ROI. As the first ROI is enlarged, a center of the first ROI may be positioned at a center of a display region of a display 230 of the electronic device 101. For example, in the display region, a dividing line (e.g., the dividing line 341 of FIG. 3) may be positioned at the center of the display region. A side of the dividing line may include a first image portion of the first image. According to an embodiment, the first image portion corresponds to a portion of the first ROI among the first image. Another side of the dividing line may include a second image portion of the second image. The second image portion corresponds to another portion of the first ROI among the second image. In addition, according to an embodiment, the electronic device 101 may move the dividing line (e.g., the dividing line 341 of FIG. 3) and a visual object (e.g., the visual object 343 of FIG. 3) for the dividing line to the first ROI. According to an embodiment, the electronic device 101 may move the dividing line and the visual object from the center of the display region of the display 230 of the electronic device 101 to the center of the first ROI. In addition, according to an embodiment, the electronic device 101 may also perform both the enlargement and the movement of the first ROI.

Although not illustrated in FIG. 4, the electronic device 101 may perform an additional operation before performing the image processing. For example, the electronic device 101 may perform resizing on an image in which the number of pixels is greater than or equal to the threshold value. When pixel values of the image are utilized as they are, a requirement of speed and memory may be increased. According to an embodiment, the electronic device 101 may reduce a size of the image inputted to the image processing through the resizing before performing the image processing. A size of the first image may be smaller than a size of the original image. In addition, for example, the electronic device 101 may perform channel simplification on the original image to reduce a size of data. The electronic device 101 may change a color of 3-channel (e.g., red green blue (RGB) channels) of each pixel to 1-channel (e.g., a black and white). By decreasing the image size and the image data, an amount of computation of the electronic device 101 that obtains the ROI may be decreased.

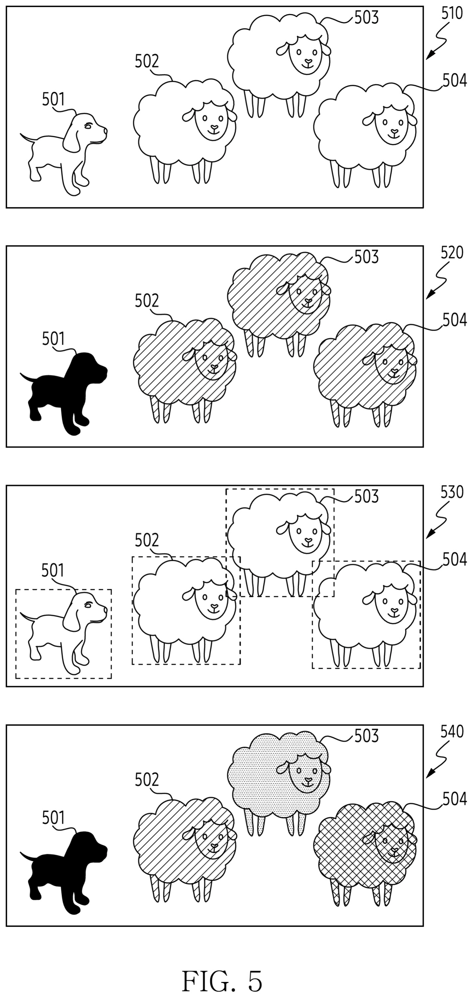

FIG. 5 indicates examples of an object extraction. According to an embodiment, an electronic device 101 may perform the object extraction for the image. An electronic device (e.g., the electronic device 101 of FIG. 1) may obtain at least one objects included in the image from the image. According to an embodiment, since the object included in the image may become a target of an image processing, the electronic device 101 may set a region including the object as a region of interest. The object extraction may be performed based on various algorithms. For example, the object extraction may be performed based on an algorithm using an artificial intelligence (AI). Hereinafter, examples of the algorithms for the object extraction are described in FIG. 5.

Referring to FIG. 5, according to an embodiment, the electronic device 101 may perform an image recognition 510 on the image. For example, the image recognition 510 is a technology for indicating what kind of a specific object is by learning various kinds of images. According to an embodiment, the electronic device 101 may identify that a first object 501 is a dog, and each of a second object 502, a third object 503, and a fourth object 504 is a sheep. The electronic device 101 may identify the first object 501, the second object 502, the third object 503, and the fourth object 504 from the image based on the image recognition 510. According to an embodiment, the electronic device 101 may determine a region including each of the first object 501, the second object 502, the third object 503, and/or the fourth object 504 as the ROI.

According to an embodiment, the electronic device 101 may perform a semantic segmentation 520 on the image. The semantic segmentation 520 is a technology for identifying a type of an object in the image through segmentation of pixels in the image. The electronic device 101 may identify the objects (e.g., the first object 501, the second object 502, the third object 503, and the fourth object 504) in the image by grouping pixels (e.g., a pixel set and a super pixel) having similar characteristics. The electronic device 101 may identify a class to which each object belongs. For example, the electronic device 101 may identify that the first object 501 belongs to a class for the dog. The electronic device 101 may identify that the second object 502, the third object 503, and the fourth object 504 belong to a class for the sheep. According to an embodiment, the electronic device 101 may determine the region including each of the first object 501, the second object 502, the third object 503, and/or the fourth object 504 as a region of interest (ROI).

According to an embodiment, the electronic device 101 may perform an object detection 530 on the image. The object detection 530 is a technology for detecting an object corresponding to a class used for training from the image and providing information on a position of the object. For example, the object detection 530 may indicate each object in the image through a bounding box. According to an embodiment, the electronic device 101 may detect the objects (e.g., the first object 501, the second object 502, the third object 503, and the fourth object 504) in the image based on the object detection 530. The electronic device 101 may determine the region including each of the first object 501, the second object 502, the third object 503, and/or the fourth object 504 as the ROI.

According to an embodiment, the electronic device 101 may perform an instance segmentation 540 on the image. The instance segmentation 540 is a technology for identifying an object in the image through the segmentation of the pixels in the image. Unlike the semantic segmentation 520, it may distinguish not only a class to which an object belongs but also between instances in the class. The electronic device 101 may identify a class and an instance belonging to the class. For example, the electronic device 101 may identify the first object 501 in the class for the dog. The electronic device 101 may identify the second object 502, the third object 503, and the fourth object 504 in the class for the sheep. The electronic device 101 may determine the region including each of the first object 501, the second object 502, the third object 503, and/or the fourth object 504 as the ROI.

In FIG. 5, four algorithms for identifying the objects (e.g., the first object 501, the second object 502, the third object 503, and the fourth object 504) in the image have been described. In addition to using the four algorithms individually, performing the object extraction based on a combination of at least two of the four algorithms may also be understood as an embodiment of the present disclosure. In addition, in addition to the four algorithms, an algorithm using machine learning or deep learning may be used to obtain the object in the image. In addition, it is not limited to an embodiment in which the object are automatically classified by the artificial intelligence, and after a user arbitrarily sets the region of the object, the classification of the object may proceed manually. The electronic device 101 may receive a user input for classifying the object. The electronic device 101 may identify the object for setting the ROI in the image based on the user input. As a non-limiting example, the electronic device 101 may perform the classification of the objects in the image by performing the automatic classification using the artificial intelligence and the manual classification according to the user input together.

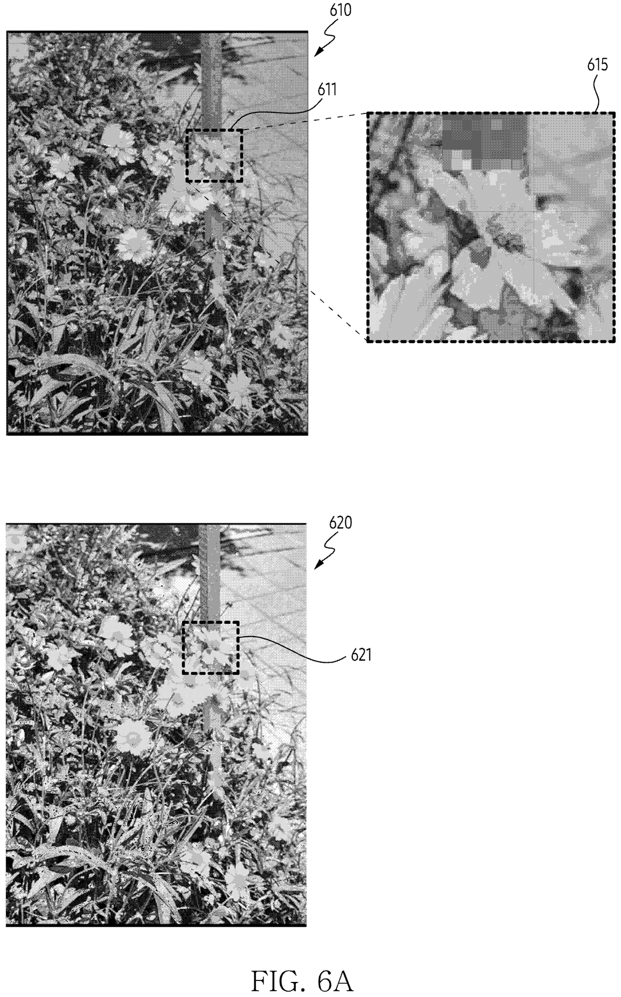

In FIG. 5, an example in which the object extraction is performed to determine the ROI has been described. In addition to the object extraction, the electronic device 101 may obtain the ROI in another method. Hereinafter, examples for obtaining the ROI from the image in a method different from the object extraction in FIG. 5 are described in FIGS. 6A to 6E.

FIGS. 6A to 6E indicate examples of obtaining of a region of interest.

Referring to FIG. 6A, an electronic device 101 may obtain the ROI based on an image processing (e.g., the image processing of FIG. 3). According to an embodiment, the electronic device 101 may perform the image processing. The electronic device 101 may obtain a second image 620 based on the image processing on a first image 610. According to an embodiment, a target region 611 of the first image 610 may include a first portion 615. The first portion 615 may have a first resolution. The image processing may convert the first resolution into a second resolution. A resolution indicates the number of pixels that may be represented on one screen. As a resolution of an image is increased, the image may provide a clearer screen to a user. For example, the electronic device 101 may perform the image processing improving the resolution of the image by converting to the second resolution higher than the first resolution. According to the image processing, a target region 621 of the second image 620 may have the second resolution. The electronic device 101 may obtain the ROI as the target region 611 of the first image 610 and the target region 621 of the second image 620. The image processing may include not only correction of the resolution but also various processing operations. For example, the image processing may include removal of a shadow. A region associated with the shadow in the image may have an important meaning in the image processing. The electronic device 101 may identify the region associated with the shadow based on a difference image between a first image and a second image according to the image processing. Alternatively, the electronic device 101 may identify the region associated with the shadow by detecting a region having brightness and contrast of the image lower than a threshold value. The electronic device 101 may obtain the ROI that is the region associated with the shadow. As another example, the image processing may include reflected light removal or foreign substances removal. The electronic device 101 may obtain a region from which the reflected light is removed or a region from which the foreign substances are removed as the ROI. For another example, the image processing may include adjustment of all tones with respect to the contrast, saturation, or a pixel value. The electronic device 101 may obtain an entire region (hereinafter, referred to as an image region) of the image as the ROI.

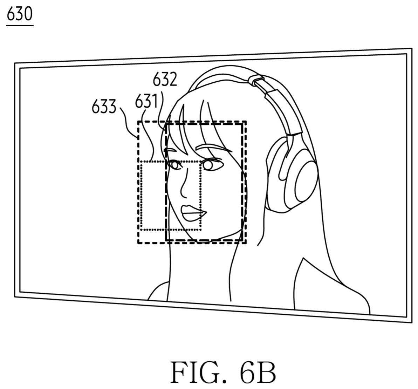

Referring to FIG. 6B, the electronic device 101 may obtain the ROI based on a difference in the image processing. The electronic device 101 may obtain the second image based on the image processing on the first image. According to an embodiment, the electronic device 101 may obtain the ROI based on a difference between values (e.g., the pixel value and a frequency component value) of pixels of the first image and values (e.g., the pixel value and the frequency component value) of pixels of the second image. For example, the electronic device 101 may calculate a sum of squared distance (SSD) as a difference between the first image and the second image. The electronic device 101 may calculate a difference between a value of the first image and a value of the second image for each pixel among a plurality of pixels of the image. The electronic device 101 may calculate a square of the difference (hereinafter, a difference squared value) for each pixel. The electronic device 101 may calculate a sum of difference squared values of pixels in a designated region. Based on the difference squared value of each region, the electronic device 101 may identify the ROI among a plurality of regions in the image. As the difference squared value is great, it is identified that an amount of change due to the image processing in the corresponding region becomes greater. For example, the electronic device 101 may calculate a minimum square error (MSE) as the difference between the first image and the second image. The electronic device 101 may calculate the square of the difference (hereinafter, the difference squared value) for each pixel. The electronic device 101 may calculate the sum of difference squared values of the pixels in the designated region. The electronic device 101 may calculate an average MSE of a square error for the designated region by dividing the calculated sum by the number of pixels. Based on the MSE of each region, the electronic device 101 may identify the ROI among the plurality of regions in the image. As the MSE is great, it is identified that the amount of change due to the image processing per pixel in the corresponding region becomes greater. The electronic device 101 may obtain a first candidate ROI 631 based on the difference between the first image and the second image. However, when only the first candidate ROI 631 is set as the ROI, a portion other than the region 631 may not be included in the ROI, and then a necessary image may not be included. For example, in a case that the first candidate ROI 631 is determined with only a part of a face, a portion other than the first candidate ROI 631 may not be included in the ROI, and then face cropping in the image may occur. Since the face cropping may cause inconvenience to the user, the electronic device 101 may perform face detection and/or an object extraction (e.g., object detection). For example, the electronic device 101 may obtain a second candidate ROI 632 based on the face detection. The electronic device 101 may obtain an ROI 633 based on the first candidate ROI 631 and the second candidate ROI 632. The electronic device 101 may obtain the ROI 633 including both the first candidate ROI 631 and the second candidate ROI 632. For example, a shape of the ROI 633 may be a quadrangle box. The electronic device 101 may obtain the ROI 633 corresponding to the quadrangle box including both the first candidate ROI 631 and the second candidate ROI 632.

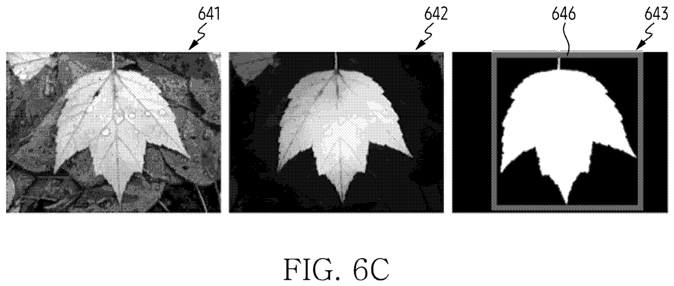

Referring to FIG. 6C, the electronic device 101 may obtain an ROI 646 based on saliency detection. The saliency detection indicates a technology for separating a background and an object by detecting a region in which a pixel value changes rapidly among values of pixels in an image. The electronic device 101 may obtain a saliency map 642 by performing the saliency detection on an image 641. The electronic device 101 may detect the object based on the saliency map 642. An image 643 indicates a result of separating the background and the object. The background of the image 643 is displayed in black and the object is displayed in white. The electronic device 101 may identify the object from which the background is separated from the image based on the saliency map 642. The electronic device 101 may determine a region of the object as the ROI 646. The electronic device 101 may obtain the ROI 646 based on the saliency detection.

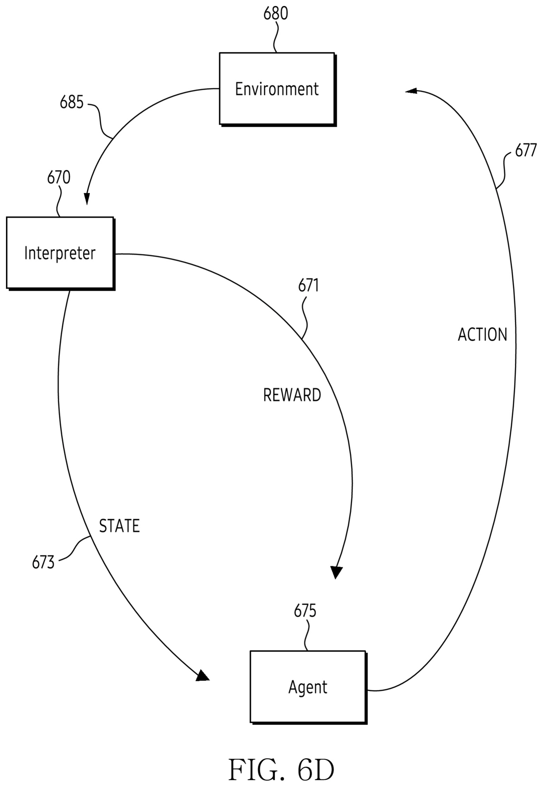

Referring to FIG. 6D, the electronic device 101 may obtain the ROI based on a reinforcement learning (RL) using a user experience. For example, the reinforcement learning is to learn which action is optimal to perform in a state 673. An agent 675 may perform an action 677. Each time the action 677 is performed, an external environment 680 provides an interpreter 670 with a result. The interpreter 670 may provide the agent 675 with a reward 671 and the state 673. The agent 675 is given the reward 671 or the state 673 is changed, and the reinforcement learning may proceed in a direction in which the reward is maximized. The electronic device 101 may collect a selection history of the ROI of the user. The electronic device 101 may use a learning model reflecting a preference of the user through the reinforcement learning on the selection history. The electronic device 101 may cluster the preference of the user based on the learning model. For example, the electronic device 101 may cluster the preference of the user based on country, region, and race. For example, the learning model may be managed for each user. According to an embodiment, the reinforcement learning may be performed in a background region of the electronic device 101. The electronic device 101 may perform the reinforcement learning at a specific time point in the background region. For example, the electronic device 101 may perform the reinforcement learning at a time point when the image processing is performed. For example, when the ROI is changed, the electronic device 101 may perform the reinforcement learning.

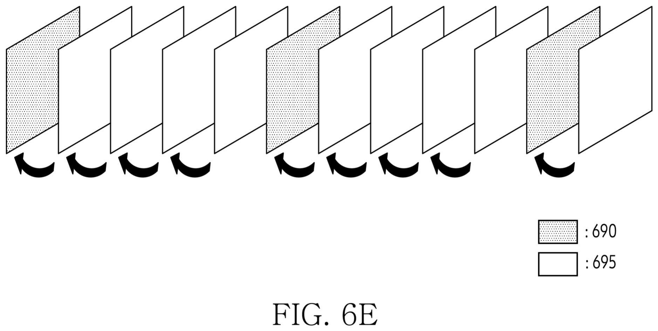

Referring to FIG. 6E, the electronic device 101 may obtain the ROI from a video. According to an embodiment, the electronic device 101 may perform the image processing on the video. The electronic device 101 may perform the image processing on each frame of frames of the video. The electronic device 101 may identify a time interval during which a result before and after the image processing is greater than the threshold value. According to an embodiment, the electronic device 101 may obtain the ROI based on the ROI of each frame included in the time interval. For example, the electronic device 101 may obtain the ROI including all ROIs of frames belonging to the time interval. As another example, the electronic device 101 may obtain the ROI through an average operation on the ROIs of the frames belonging to the time interval. In addition, the electronic device 101 may detect a frame of which an image difference is maximized among the frames. The electronic device 101 may cease playing the video in the detected frame. The electronic device 101 may consider the frame as a single image and obtain the ROI for the single image according to the method described through FIGS. 5 to 6D.

According to an embodiment, a plurality of frames of the video may include an intra (I) frame 690 and a predicted (P) frame 695. Continuous frames may be encoded into one frame group. The I frame 690 is a self-contained frame without relying on another frame for rendering. The I frame 690 may include all data on an image in a corresponding frame. The P frame 695 is a frame that requires a reference of a previously positioned frame (e.g., an I frame or a P frame) for rendering, and may include data on a difference between an image of a previous frame and an image of a current frame. Since image data of the I frame 690 includes independent information for rendering, the electronic device 101 may obtain the ROI based on the I frame 690 when performing the image processing on the video. In addition, an arrangement operation for the ROI to be described later may also be performed based on the I frames 690 of the video. Since image data of the P frame 695 indicates the difference between the image of the previous frame and the image of the current frame, the image data of the P frame 695 may be used for image tracking. For example, the image tracking may include object tracking. The electronic device 101 may calculate the ROI in each of the next P frames 695 according to the movement of the object extracted from the I frame 690. The electronic device 101 may obtain the ROI of the P frame 965 based on the image data of a corresponding P frame 965.

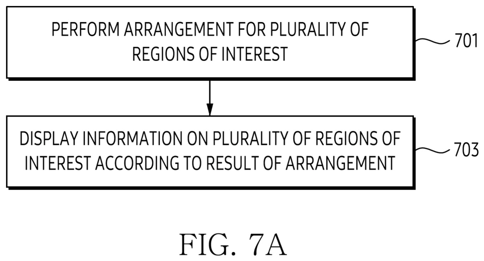

FIG. 7A indicates an operation flow of an electronic device (e.g., the electronic device 101 of FIG. 1) for displaying regions of interest. According to an embodiment, an electronic device 101 may display a first image before an image processing and a second image after the image processing to indicate a result of the image processing. The electronic device 101 may display the ROIs together with the first image and the second image.

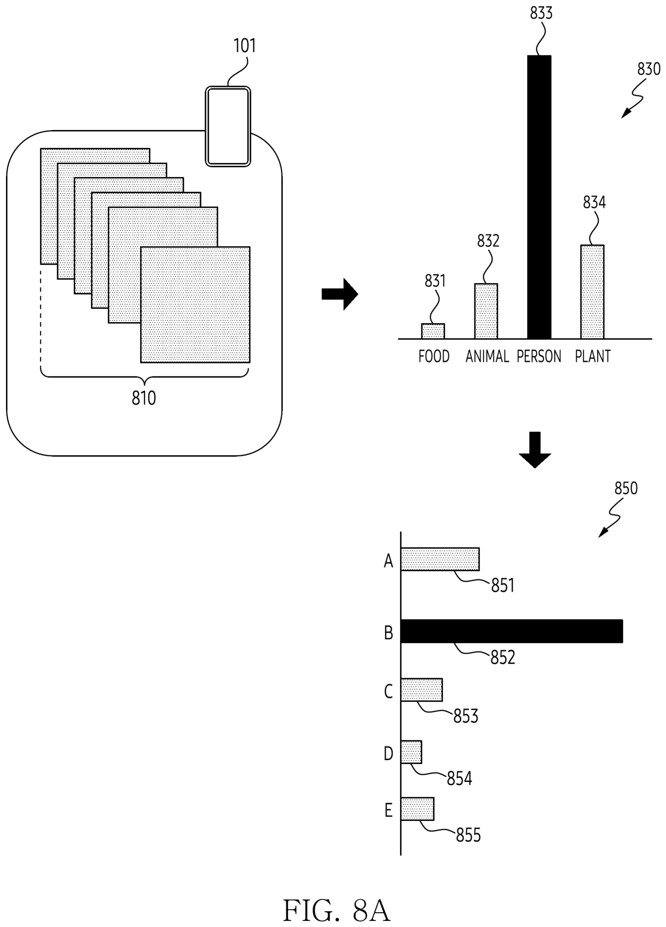

Referring to FIG. 7A, in operation 701, the electronic device 101 (e.g., the processor 220 of FIG. 2) may perform an arrangement for a plurality of ROIs. According to an embodiment, the arrangement for the plurality of ROIs may be performed according to a priority of each ROI. In order to more effectively indicate the result of the image processing, for example, the electronic device 101 may determine the priority of each ROI. A priority of a region in which a user is expected to be relatively more interested may be higher than a priority of a region in which the user is expected to be relatively less interested. The priority may be preset based on an account information of the user, or may be set based on a frequency of each object of images stored in the electronic device 101 and/or a predetermined rule. An example of the arrangement for the plurality of ROIs according to the priority will be described in detail through FIG. 8A.

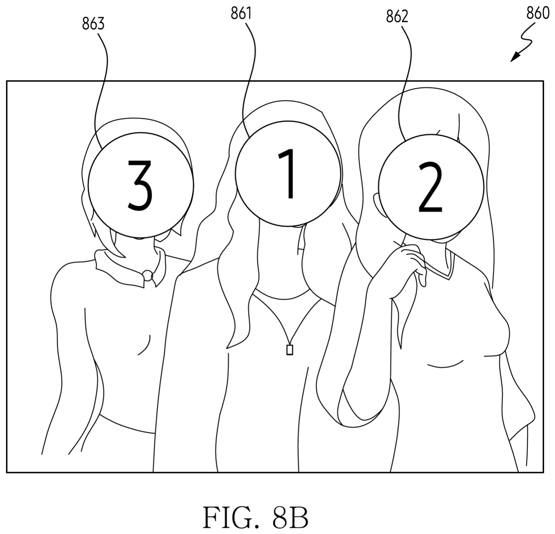

According to an embodiment, the arrangement for the plurality of ROIs may be performed based on a difference degree between the first image and the second image in each ROI. For example, the electronic device 101 may perform the arrangement for the plurality of ROIs in a descending order of the difference degree between the first image and the second image. An example of the arrangement for the plurality of ROIs according to the difference degree will be described in detail through FIG. 8B.

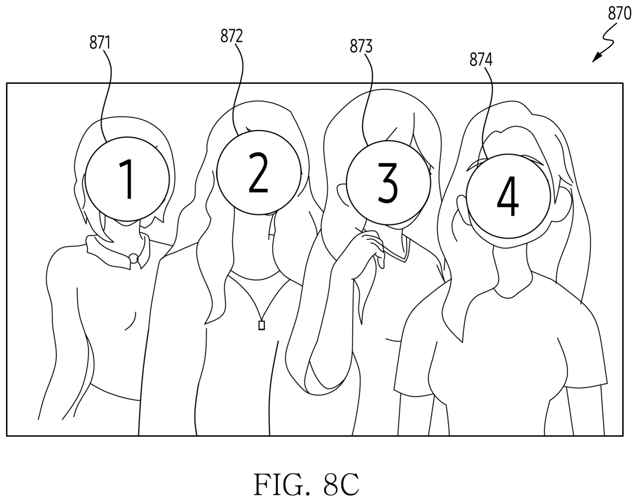

According to an embodiment, the arrangement for the plurality of ROIs may be performed according to a position of each ROI in an image region. For example, the electronic device 101 may perform the arrangement for the plurality of ROIs along a designated direction (e.g., a left-to-right direction, a counterclockwise direction, and a clockwise direction). An example of the arrangement for the plurality of ROIs according to the designated direction will be described in detail through FIG. 8C.

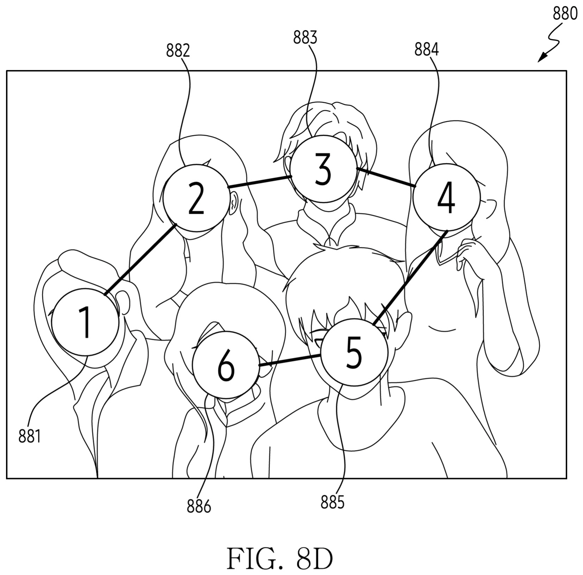

According to an embodiment, the arrangement for the plurality of ROIs may be performed based on a shortest path algorithm. For example, when the user sequentially checks the plurality of ROIs, the electronic device 101 may arrange the plurality of ROIs such that the user feels less inconvenience due to movement of a screen. The plurality of ROIs may be arranged based on a shortest path using each ROI as a node. An example of the arrangement for the plurality of ROIs along the shortest path will be described in detail through FIG. 8D.

In operation 703, the electronic device 101 (e.g., the processor 220 of FIG. 2) may display information on the plurality of ROIs according to a result of the arrangement. The electronic device 101 may sequentially display each of the plurality of ROIs based on the arrangement. According to an embodiment, the electronic device 101 may display the information on the plurality of ROIs in another region other than a region in which the result of the image processing is displayed. For example, the region in which the result of the image processing is displayed may include a first portion (e.g., the first portion 310) of the first image and a second portion (e.g., the second portion 320) of the second image. The electronic device 101 may display a dividing line (e.g., the dividing line 341) and a visual object (e.g., the visual object 343) between the first portion and the second portion. The electronic device 101 may display information indicating each of the plurality of ROIs at a lower end of the first portion of the first image and the second portion of the second image. When a user input instructing a specific ROI among the plurality of ROIs is received, the electronic device 101 may enlarge and display the specific ROI. The electronic device 101 may adjust the first portion of the first image and the second portion of the second image. The adjusted first portion of the first image may include a portion of the specific ROI. The adjusted second portion of the second image may include another portion of the specific ROI.

According to an embodiment, the electronic device 101 may display the information on the plurality of ROIs in the region in which the result of image processing is displayed. For example, the region in which the result of the image processing is displayed may include the first portion (e.g., the first portion 310) of the first image and the second portion (e.g., the second portion 320) of the second image. The electronic device 101 may display the dividing line (e.g., the dividing line 341) and the visual object (e.g., the visual object 343) between the first portion and the second portion. The electronic device 101 may display each of the plurality of ROIs in an overall size of the first image and the second image, for example, the image region (e.g., the image region 330). As an example, each ROI may be displayed in the image region through a quadrangle box. When the user input indicating the specific ROI among the plurality of ROIs is received, the electronic device 101 may enlarge and display the specific ROI. The electronic device 101 may adjust the first portion of the first image and the second portion of the second image. The adjusted first portion of the first image may include the portion of the specific ROI. The adjusted second portion of the second image may include the other portion of the specific ROI.

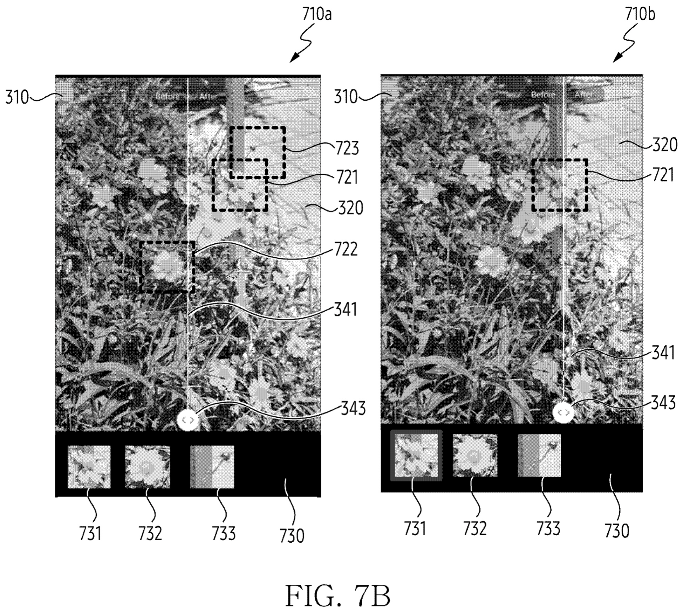

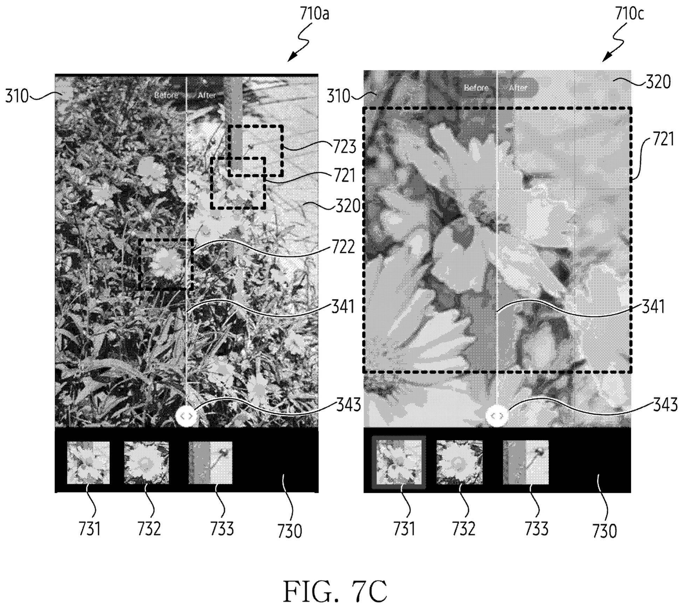

FIGS. 7B and 7C indicate examples of a user interface (UI) of an electronic device (e.g., the electronic device 101 of FIG. 1) for displaying regions of interest.

Referring to FIG. 7B, an electronic device 101 may display a first screen 710a after an image processing is performed. After the image processing is performed, the electronic device 101 may display a screen 710a. For example, the electronic device 101 may display a first portion 310 of a first image and a second portion 320 of a second image. The electronic device 101 may include a dividing line 341 and a visual object 343 for controlling a position of the dividing line 341. The electronic device 101 may obtain a plurality of ROIs. The electronic device 101 may display the plurality of ROIs. For example, the electronic device 101 may obtain a first ROI 721, a second ROI 722, and a third ROI 723. The electronic device 101 may perform an arrangement for the plurality of ROIs. For example, it may be arranged in an order of the first ROI 721, the second ROI 722, and the third ROI 723. The electronic device 101 may display the plurality of ROIs. For example, the electronic device 101 may display the first ROI 721, the second ROI 722, and the third ROI 723. The electronic device 101 may display a visual object indicating each ROI in an image. A shape of the visual object may be a quadrangle box. The electronic device 101 may display information on the ROI on a lower region 730. For example, the electronic device 101 may display first information 731 on the first ROI 721, information 732 on the second ROI 722, and information 733 on the third ROI 723. In FIG. 7B, an example in which the ROI and the information on the ROI are displayed together has been described, but embodiments of the present disclosure are not limited thereto. According to an embodiment, the electronic device 101 may display the first ROI 721, the second ROI 722, and the third ROI 723 in the image without the lower region 730. According to another embodiment, the electronic device 101 may also display information on each ROI only in the lower region 730 without a separate visual object (e.g., the quadrangle box) in the image.

According to an embodiment, the electronic device 101 may receive a user input indicating the first ROI 721. For example, the electronic device 101 may receive a touch input on the first information 731 on the first ROI 721 of the lower region 730. The electronic device 101 may control a screen such that the dividing line 341 and the visual object 343 move to the first ROI 721. The electronic device 101 may display a screen 710b. According to an embodiment, the dividing line 341 for comparing results before and after the image processing may be positioned in the first ROI 721 instructed by the user input. For example, the dividing line 341 for comparing the results before and after the image processing may be positioned in the first ROI 721 instructed by the user input to across at least a portion of the first ROI 721. In FIG. 7B, an example in which the dividing line 341 and the visual object 343 move to the ROI desired by the user is described. However, in addition to moving the screen to the ROI, the electronic device 101 may enlarge the ROI and display the enlarged ROI. Hereinafter, an example of the enlargement of the ROI is described through FIG. 7C.

Referring to FIG. 7C, the electronic device 101 may display the first screen 710a after the image processing is performed. After the image processing is performed, the electronic device 101 may display a screen 710a. For example, the electronic device 101 may display the first portion 310 of the first image and the second portion 320 of the second image. The electronic device 101 may include the dividing line 341 and the visual object 343 for controlling the position of the dividing line 341. For a description of the first ROI 721, the second ROI 722, and the third ROI 723, FIG. 7B may be referred to. For a description of the first information 731 on the first ROI 721, the first information 732 on the second ROI 722, and the third information 733 on the third ROI 723, FIG. 7B may be referred to.

The electronic device 101 may receive the user input indicating the first ROI 721. For example, the electronic device 101 may receive the first information 731 on the first ROI 721 of the lower region 730 or the touch input on the first ROI 721. The electronic device 101 may enlarge the first ROI 721. According to an embodiment, the electronic device 101 may divide the first ROI 721 into a first region and a second region. The electronic device 101 may enlarge a size of a first image portion. According to an embodiment, the first image portion may be a portion of the first image corresponding to the first region among the first ROI 721. The size of the first image portion may be changed based on a size of a display region of a display of the electronic device 101. According to an embodiment, the electronic device 101 may display the first image portion having the changed size through the display. The electronic device 101 may enlarge a size of at least a portion region of a second image portion. The second image portion may be a portion of the second image corresponding to the second region among the first ROI 721. The size of the second image portion may be changed based on the size of the display region of the display of the electronic device 101. The electronic device 101 may display the second image portion having the changed size through the display. The electronic device 101 may display a screen 710c. The dividing line 341 may be positioned substantially at a center of the screen 710c. The visual object 343 may be positioned on the dividing line 341. According to an embodiment, although switching from the screen 710a to the screen 710c, the dividing line 341 and the visual object 343 may be continuously displayed at the same position without movement. The dividing line 341 for comparing the results before and after the image processing may be positioned in the first ROI 721 instructed by the user input.

According to an embodiment, in addition to the user input indicating the ROI, the electronic device 101 may display the first image portion and the second image portion through the user input (e.g., a zoom-in input, a zoom-out input, and a drag input) on the image. For example, the electronic device 101 may receive the zoom-in input for enlarging a specific region. For example, the electronic device 101 may receive the zoom-out input for reducing the specific region. For example, the electronic device 101 may receive the drag input for searching for the specific region.

In FIGS. 7B and 7C, examples of indicating an entire image after the image processing and then displaying the dividing line 341 to be positioned in the specific ROI according to the user input have been described. However, the UIs described through FIGS. 7B and 7C are exemplary, and embodiments of the present disclosure are not limited thereto. According to an embodiment, after the image processing, the electronic device 101 may directly display the first ROI 721 having a highest priority among the ROIs. For example, after the image processing, the electronic device 101 may display the screen 710b without the screen 710a. For example, after the image processing, the electronic device 101 may display the screen 710c without the screen 710a.

FIGS. 8A to 8D indicate examples of an arrangement of a region of interest.

Referring to FIG. 8A, according to an embodiment, an electronic device 101 may arrange a plurality of ROIs based on a priority. The priority of the ROI may reflect a preference of a user. The electronic device 101 may arrange the plurality of ROIs with respect to a plurality of objects. Each ROI may include an object. As an object is preferred by the user, the priority may be set higher. For example, the electronic device 101 may store a plurality of images 810 in memory (e.g., the memory 130). The electronic device 101 may perform an analysis for the plurality of images 810. The electronic device 101 may obtain a frequency of each object category (e.g., a person, an object, an animal, a plant, a food, and a building) of objects included in the plurality of images 810 based on the analysis of the plurality of images 810. For example, a histogram 830 indicates the frequency of each object category. The histogram 830 indicates a frequency 831 for the food, a frequency 832 for the animal, a frequency 833 for the person, and a frequency 834 for the plant. According to an embodiment, according to the histogram 830, the electronic device 101 may determine a user preference in an order of 'the person, the plant, the animal, and the food'. According to an embodiment, the electronic device 101 may arrange the ROIs based on the priority of the object category. For example, the electronic device 101 may arrange the plurality of ROIs in an order of a person category, a plant category, an animal category, and a food category.

According to an embodiment, the electronic device 101 may determine a priority for an individual person even in the 'person' category. For example, the plurality of images 810 may include a person A, a person B, a person C, a person D, and a person E belonging to the 'person' category. The electronic device 101 may obtain a frequency of each of the person A, the person B, the person C, the person D, and the person E in the plurality of images 810. For example, the histogram 850 indicates the frequency of each object. The histogram 850 indicates a frequency 851 for the person A, a frequency 852 for the person B, a frequency 853 for the person C, a frequency 854 for the person D, and a frequency 855 for the person E. According to the histogram 850, the electronic device 101 may determine the user preference in an order of 'the person B, the person A, the person C, the person E, and the person D'. The electronic device 101 may arrange the ROIs based on the priority of the object. For example, the electronic device 101 may arrange the ROIs according to a preference of each object, even in the same category.

In FIG. 8A, an example of checking the priority of the object category and checking the priority for the objects in the object category was described through an analysis of the plurality of images 810 stored in the electronic device 101. However, embodiments of the present disclosure are not limited thereto. According to an embodiment, the electronic device 101 may arrange the plurality of ROIs based on the frequency of each object of the objects stored in the plurality of images 810 without distinction of the object category.

In FIG. 8A, an example of checking the preference of the user through the analysis of the plurality of images 810 stored in the electronic device 101 has been described. However, embodiments of the present disclosure are not limited thereto. According to an embodiment, the preference of the user may be identified not only through the analysis of the images stored in the electronic device 101 but also through an analysis of images in a device or a cloud storage connected to an account of the user of the electronic device 101.

Referring to FIG. 8B, the electronic device 101 may arrange the plurality of ROIs based on a difference degree between a first image and a second image. The electronic device 101 may obtain the second image based on an image processing on the first image. For each ROI, the first image may include a first image portion corresponding to the ROI, and the second image may include a second image portion corresponding to the ROI. The electronic device 101 may indicate a difference degree between a corresponding ROI based on a difference between the first image portion and the second image portion. The difference degree may be referred to as a term having a difference score, a difference level, a difference value, difference information, or an equivalent technical meaning for the image processing. For example, the electronic device 101 may obtain a first ROI 861, a second ROI 862, and a third ROI 863.

The electronic device 101 may calculate a difference value between values of the first image and values of the second image for each pixel of pixels of the first ROI 861. The electronic device 101 may calculate a sum of the difference values of the pixels of the first ROI 861. For example, the sum of the difference values of the pixels of the first ROI 861 may be approximately 99. The electronic device 101 may calculate a difference value between values of the first image and values of the second image for each pixel of pixels of the second ROI 862. The electronic device 101 may calculate a sum of the difference values of the pixels of the second ROI 862. For example, the sum of the difference values of the pixels of the second ROI 862 may be approximately 77. The electronic device 101 may calculate a difference value between values of the first image and values of the second image for each pixel of pixels of the third ROI 863. The electronic device 101 may calculate a sum of the difference values of the pixels of the third ROI 863. For example, the sum of the difference values of the pixels of the third ROI 863 may be approximately 88. Referring to a screen 860, the electronic device 101 may arrange the first ROI 861, the second ROI 862, and the third ROI 863 according to a descending order of the difference degree. The arrangement of the ROIs may be performed in an order of the first ROI 861, the third ROI 863, and the second ROI 862.

Referring to FIG. 8C, according to an embodiment, the electronic device 101 may arrange the plurality of ROIs according to a designated direction. In switching of the ROIs, the plurality of ROIs may be arranged according to the designated direction to provide an intuitive interface to the user. For example, the electronic device 101 may perform the arrangement for the plurality of ROIs in a left-to-right direction (or in a right-to-left direction). Referring to the screen 870, the arrangement of the ROIs may be performed in an order of the first ROI 871, the second ROI 872, the third ROI 873, and the fourth ROI 874.

In FIG. 8C, the left-to-right arrangement is described as an example, but embodiments of the present disclosure are not limited thereto. According to an embodiment, the electronic device 101 may arrange the plurality of ROIs in a bottom-to-top direction (or in a top-to-bottom direction). The electronic device 101 may identify a position for each ROI of the plurality of ROIs. In the electronic device 101, in a case that a difference in a vertical direction (e.g., a sum of difference values in the y-axis) of positions (e.g., an (x, y) coordinate when a horizontal is an x-axis and a vertical is a y-axis) of the plurality of ROIs is larger than a difference (e.g., a sum of difference values in the x-axis) in a horizontal direction, the plurality of ROIs in the electronic device 101 may be advantageous to be arranged in the vertical direction rather than in the horizontal direction. For example, the electronic device 101 may arrange the plurality of ROIs in the bottom-to-top direction (e.g., in a direction in which a y-coordinate increases). According to an embodiment, the electronic device 101 may perform the arrangement for the plurality of ROIs in a clockwise direction (or a counterclockwise direction). For example, the electronic device 101 may sequentially arrange the plurality of ROIs when a reference point moves along a virtual closed curve (e.g., a circle) in the image, with the ROI adjacent to the reference point being arranged sequentially.

Referring to FIG. 8D, the electronic device 101 may arrange the plurality of ROIs based on a shortest path algorithm. In switching of the ROIs, the plurality of ROIs may be arranged along a designated path so as to feel less inconvenience due to the movement of a screen. The designated path may be determined based on the shortest path algorithm using each ROI as a node. For example, the shortest path algorithm may include a Dijkstra algorithm, a depth first search algorithm, and/or a breadth first search algorithm. Referring to a screen 880, the arrangement of the ROIs may be performed in an order of a first ROI 881, a second ROI 882, a third ROI 883, a fourth ROI 884, a fifth ROI 885, and a sixth ROI 886.

In addition to the method described in FIGS. 8A to 8D, various methods may be used to arrange the plurality of ROIs. For example, the plurality of ROIs may be arranged based on a preference according to a reinforcement learning. The electronic device 101 may collect a selection history of the ROI of the user. The electronic device 101 may use a learning model reflecting the preference of the user through the reinforcement learning on the selection history. The electronic device 101 may arrange the plurality of ROIs based on the learning model.

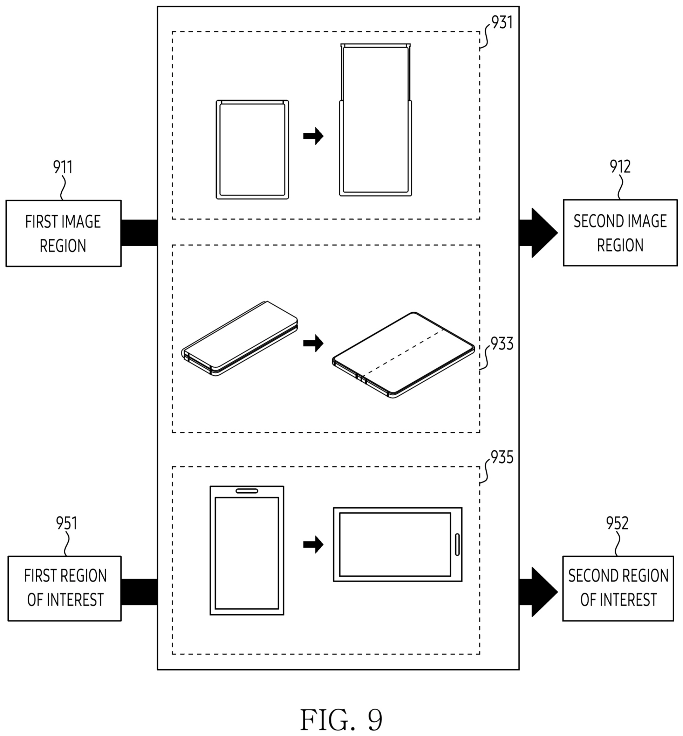

FIG. 9 indicates examples of a change in a display region. A display (e.g., the display 220 of FIG. 2) of an electronic device (e.g., the electronic device 101 of FIG. 1) may display an image through the display region. According to an embodiment, a size and/or an aspect ratio of the display region may be changed according to a state of an electronic device 101. Hereinafter, in FIG. 9, an image region and a region of interest before a ratio of the display region is changed may be referred to as a first image region 911 and a first ROI 951, respectively. After the ratio of the display region is changed, an image region and a ROI may be referred to as a second image region 912 and a second ROI 952, respectively.

Referring to FIG. 9, the display region of the electronic device 101 may be changed. For example, the electronic device 101 may be a rollable device 931. The display (e.g., the display 230 of FIG. 2) of the rollable device 931 may be flexible. For example, the display may include the display region exposed outside a housing of the electronic device 101 that provides at least a portion of an outer surface of the electronic device 101. For example, since the display has flexibility, at least a portion of the display may be rollable into the housing or slidable into the housing. For example, the size of the display region may be changed according to a size of the at least a portion of the display rolled into the housing or slid into the housing. For example, the electronic device 101 including the display may be in a plurality of states. The plurality of states may include a first state 932a providing the display region having a first size and a second state 932b providing the display region having a second size different from the first size. For example, the state of the electronic device 101 may be changed from the first state 932a to the second state 932b that provides the display region of the second size larger than the first size. The size of the display region and the aspect ratio may be different.

For example, the electronic device 101 may be a foldable device 933. The foldable device 933 may include a first housing, a second housing, a hinge structure for connecting the first housing and the second housing, a first display, and a second display. For example, the first display may be disposed on a first surface of the first housing. The second display may be disposed over a second surface opposite to the first surface of the first housing and the first surface of the second housing. In a first state 934a, the second surface of the first housing may be disposed to face the first surface of the second housing. The first state 934a may be referred to as a folded state. In the first state 934a, the foldable device 933 may display the image through a first display region of the first display. In a second state 934b, the second surface of the second housing and the first surface of the second housing may be disposed to face the same direction. The second state 934b may be referred to as an unfolded state. In the second state 934b, the foldable device 933 may display the image through a second display region of the second display. For example, the state of the electronic device 101 may be changed from the first state 934a to the second state 934b. The first display region of the first display and the second display region of the second display may be different. A size of the first display region and a size of the second display region may be different. An aspect ratio of the first display region and an aspect ratio of the second display region may be different.

For example, the electronic device 101 may be a bar-type device 935. The bar-type device 935 may include the display (e.g., the display 230 of FIG. 2). The bar-type device 935 may operate in a landscape mode (or a horizontal mode) or a portrait mode (or a vertical mode) according to an attitude of the bar-type device 935. According to the mode of the bar-type device 935, a screen ratio of the display region may be different. For example, the state of the electronic device 101 may be changed from a first state 936a to a second state 936b. The aspect ratio of the display region of the display may be different.

The electronic device 101 may display the image region (e.g., the first image region 911 and the second image region 912) corresponding to an entire image. The electronic device 101 may display the ROI (e.g., the first ROI 951 and the second ROI 952) associated with an image processing. As the aspect ratio of the display region is different, the electronic device 101 may convert the first image region 911 into the second image region 912. The second image region 912 may be determined based on the aspect ratio of the first image region 911, the size of the display region, and the ratio of the display region. As the aspect ratio of the display region is different, the electronic device 101 may convert the first ROI 951 into the second ROI 952. A size and an aspect ratio of the second ROI 952 may be determined according to the aspect ratio of the first ROI 951, the size of the display region, and the ratio of the display region. For example, the electronic device 101 may scale (e.g., enlarge or reduce) the first image region 911 while maintaining the aspect ratio of the first image region 911. The electronic device 101 may enlarge or reduce the first image region 911 such that a horizontal length of the first image region 911 coincides with a horizontal length of the display region or a vertical length of the first image region 911 coincides with a vertical length of the display region. The electronic device 101 may obtain the second image region 912 based on the enlargement or the reduction of the first image region 911. The electronic device 101 may scale (e.g., enlarge or reduce) the first ROI 951 while maintaining the aspect ratio of the first ROI 951. The electronic device 101 may enlarge or reduce the first ROI 951 such that a horizontal length of the first ROI 951 coincides with a horizontal length of the display region or a vertical length of the first ROI 951 coincides with a vertical length of the display region. The electronic device 101 may obtain the second ROI 952 based on the enlargement or the reduction of the first ROI 951. When the second ROI 952 is included in the second image region 912, the electronic device 101 may not display the second ROI 952. For example, when a horizontal length of the second ROI 952 is smaller than a horizontal length of a second image region 952, and a vertical length of the second ROI 952 is smaller than a vertical length of the second image region 952, the electronic device 101 may determine that the second ROI 952 is included in the second image region 912. Displaying the second ROI 952 through the display is to provide an improvement effect of the image processing through enlargement of the second ROI 952. However, when a size of the second ROI 952 is smaller than a size of the second image region 912, the electronic device 101 has a low real benefit to separately display the second ROI 952. The electronic device 101 may not display the second ROI 952. In this way, according to a change (e.g., a change in the ratio of the display region) in the display region, an operation of determining whether to display a specific ROI may be referred to as filtering of the ROI. When the aspect ratio in the display region is changed, the electronic device 101 may filter at least one ROI among a plurality of ROIs. The electronic device 101 may perform a conversion for each ROI among the plurality of ROIs based on the change in the ratio of the display region. When the converted image (e.g., the second image region 912) includes the converted ROI (e.g., the second ROI 952), the electronic device 101 may exclude the display of a corresponding display region.

In FIG. 9, an example of changing from the first state to the second state has been described, but even in a case (e.g., changing from the second state 932b to the first state 932a) of returning from the second state to the first state, filtering of the ROI may be performed. Meanwhile, the ROI excluded through the filtering in the second state 936b may be extracted again as the ROI in the first state 936a. Although the ROI is excluded from a list of ROIs to be displayed in the second state 936b, the electronic device 101 may be configured to be displayed in the first state 931a based on information on the ROI stored in another state (e.g., the first state 936a).

Examples in which the ratio of the display region is changed according to the state of the electronic device are described in FIG. 9, but embodiments of the present disclosure are not limited thereto. A picture-in-picture (PIP) may be performed by a control of the user. Based on a window (e.g., a pop-up window and a PIP window) of an application displaying the image, a size of the image region and the ROI may be adjusted. A size of the window may vary according to a user input or a designated control method. Based on a ratio of the window, the size of the image region and the ROI may be adjusted. Based on a result of the adjustment, the electronic device 101 may perform filtering for the ROI.

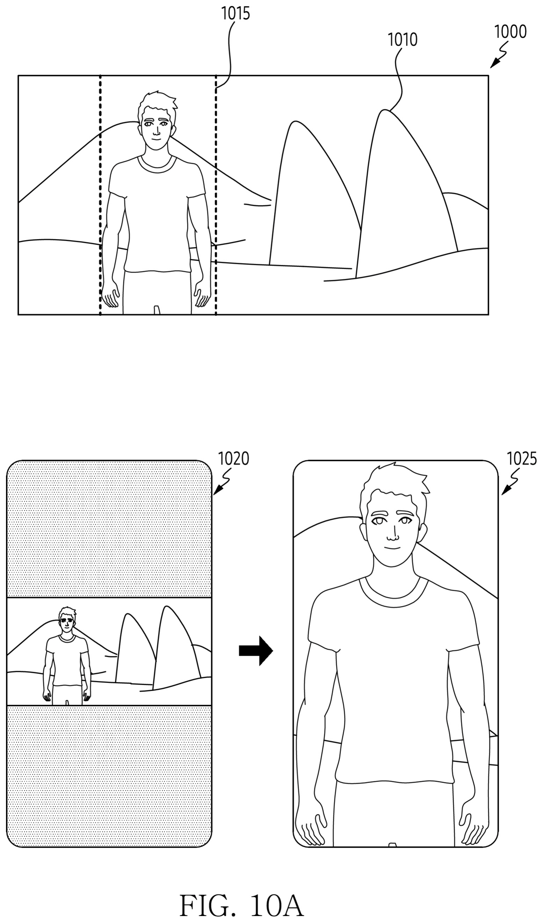

FIGS. 10A to 10B indicate an example of filtering of a region of interest.

Referring to FIG. 10A, an image 1000 may include an image region 1010 corresponding to an entire image and an ROI 1015 associated with an image processing. The electronic device 101 may operate in a portrait mode (e.g., the first state 936a). A size of the image region 1010 and the ROI 1015 may be changed to match a ratio in the portrait mode. A ratio of the image region 1010 may be maintained, and the size of the image region 1010 may be changed. For example, referring to a screen 1020, the image region 1010 may be scaled such that a horizontal length of the image region 1010 matches a horizontal length of a display region of the portrait mode or a vertical length of the image region 1010 matches a vertical length of the display region of the portrait mode of the electronic device 101. The electronic device 101 may display the screen 1020 to show the entire image to the user. A ratio of the ROI 1015 may be maintained, and the size of the ROI 1015 may be changed. For example, referring to a screen 1025, the ROI 1015 may be scaled such that a vertical length of the ROI 1015 matches the vertical length of the display region of the portrait mode or a horizontal length of the ROI 1015 matches the horizontal length of the display region of the portrait mode. A size of the ROI on the screen 1025 is larger than the size of the image region 1010 on the screen 1020. The electronic device 101 may display the screen 1025 to show the user the ROI in which the image processing has been performed.

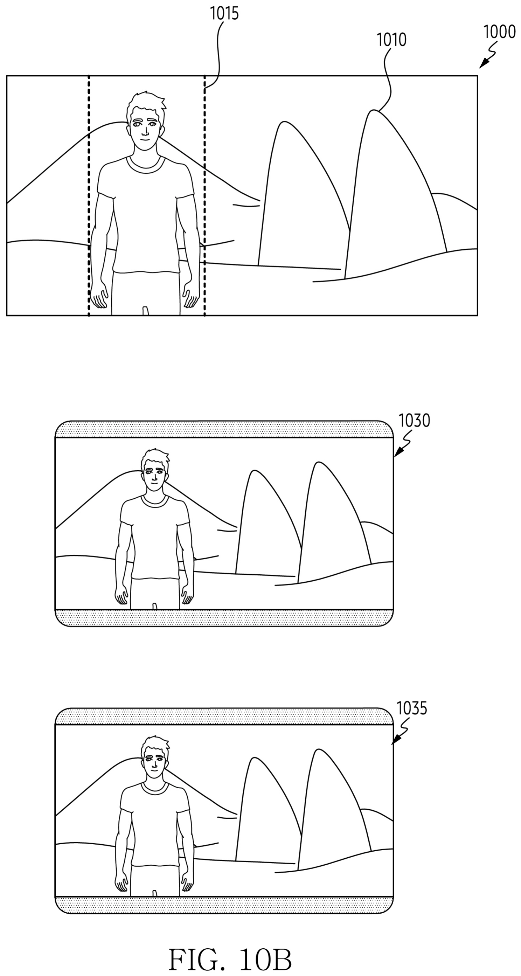

Referring to FIG. 10B, the electronic device 101 may operate in a landscape mode (e.g., the second state 936b). The size of the image region 1010 and the ROI 1015 may be changed to match a ratio in the landscape mode. The ratio of the image region 1010 may be maintained, and the size of the image region 1010 may be changed. For example, referring to a screen 1030, the image region 1010 may be scaled such that the horizontal length of the image region 1010 matches a horizontal length of a display region of the landscape mode or the vertical length of the image region 1010 matches a vertical length of the display region of the landscape mode. The electronic device 101 may display the screen 1030 to show the entire image to the user. The ratio of the ROI 1015 may be maintained, and the size of the ROI 1015 may be changed. For example, referring to a screen 1035, the ROI 1015 may be scaled such that the vertical length of the ROI 1015 matches the vertical length of the display region of the landscape mode or the horizontal length of the ROI 1015 matches the horizontal length of the display region of the landscape mode. However, a size of the ROI on the screen 1035 is not larger than the size of the image region 1010 on the screen 1030. After the scaling, in the landscape mode, the image region 1010 may include the ROI 1015. To show the user the ROI in which the image processing has been performed, there is no real benefit to display the screen 1035. The electronic device 101 may exclude the ROI 1015 from a list of ROIs to be displayed in the landscape mode.

In FIG. 10B, an example of excluding the ROI from the list of ROIs to be displayed when the image region includes the ROI has been described, but embodiments of the present disclosure are not limited thereto. According to an embodiment, even though the image region does not include all of the ROIs, when an overlapping ratio (e.g., a ratio of an overlapping region to an area of the image region) is greater than or equal to a threshold value, the electronic device 101 may exclude the ROI from the list. For example, the image region may partially overlap the ROI. A portion of the image region may overlap a portion of the ROI. The overlapping region may indicate a portion of the image region. When a ratio of an area of a portion of the image region to an entire area of the image region is greater than or equal to the threshold value, the electronic device 101 may exclude the ROI from the list.

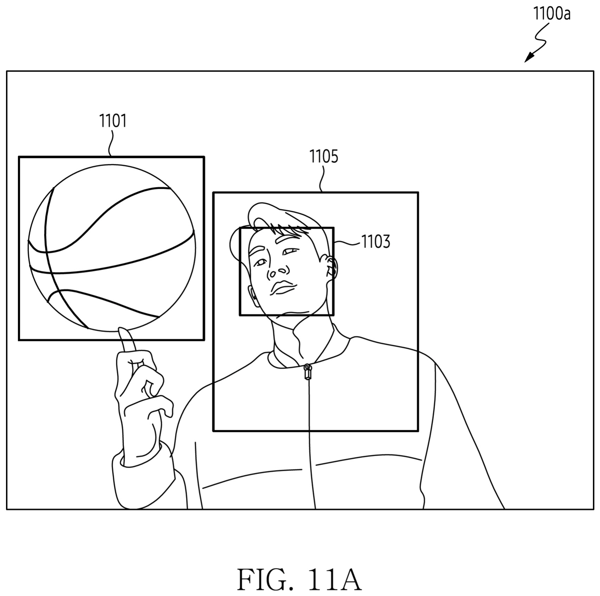

FIGS. 11A to 11D indicate examples of coupling of regions of interest. The coupling may include an operation for outputting one ROI when the ROIs overlap.

Referring to FIG. 11A, a screen 1100a indicates a plurality of ROIs. An electronic device 101 may identify objects in an image. For example, the electronic device 101 may identify a person, a face, and a ball. The electronic device 101 may obtain the plurality of ROIs based on the objects. The plurality of ROIs may include a first ROI 1101, a second ROI 1103, and a third ROI 1105. For example, when the third ROI 1105 includes all of the second ROI, the electronic device 101 has a low real benefit to display both the second ROI 1103 and the third ROI 1105 to a user. According to an embodiment, the electronic device 101 may identify one ROI based on the second ROI 1103 and the third ROI 1105. For example, the electronic device 101 may generate one ROI (e.g., the third ROI 1105) that includes both ROIs. As another example, the electronic device 101 may identify a small size of ROI (e.g., the second ROI 1103) among the two ROIs. For another example, the electronic device 101 may identify a large size of ROI (e.g., the third ROI 1105) among the two ROIs.

FIG. 11A describes that one ROI includes another ROI, but embodiments of the present disclosure are not limited thereto. According to an embodiment, when a region overlapped between one ROI and another ROI is greater than the threshold value (e.g., an in-screen threshold size), the electronic device 101 may couple the ROIs. According to an embodiment, when a ratio of an overlapping region to an area of a small ROI among the ROIs is greater than the threshold value, the electronic device 101 may couple the ROIs. For example, the electronic device 101 may identify an ROI having a large size. The electronic device 101 may identify an ROI having a small size. The electronic device 101 may generate a new ROI that includes all of the ROIs.

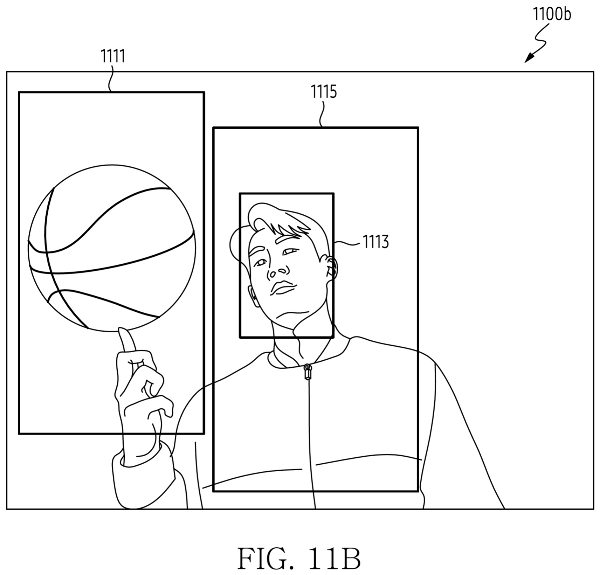

Referring to FIG. 11B, a screen 1100b indicates a display ROI. The display ROI includes the ROI and indicates a screen displayed through a display of the electronic device 101. For example, the display ROI may indicate a region that may be displayed when the ROI is enlarged through a user input to the ROI in the electronic device 101. The electronic device 101 may operate in a portrait mode (e.g., the first state 936a). For example, in the portrait mode, an aspect ratio of a display region of the electronic device 101 may be 9:16. To correspond to the ratio in the portrait mode, the electronic device 101 may obtain a first display ROI 1111, a second display ROI 1113, and a third display ROI 1115. The first display ROI 1111 may include the first ROI 1101. The second display ROI 1113 may include the second ROI 1103. The third display ROI 1115 may include the third ROI 1105. The second display ROI 1113 and the third display ROI 1115 may overlap. Due to the overlapping, the electronic device 101 may merge the second display ROI 1113 and the third display ROI 1115. For example, the electronic device 101 may display only the third display ROI 1115 except for the second display ROI 1113. The electronic device 101 may identify ROIs to be actually displayed by calculating the display ROI for each ROI and determining whether the display ROIs overlap.

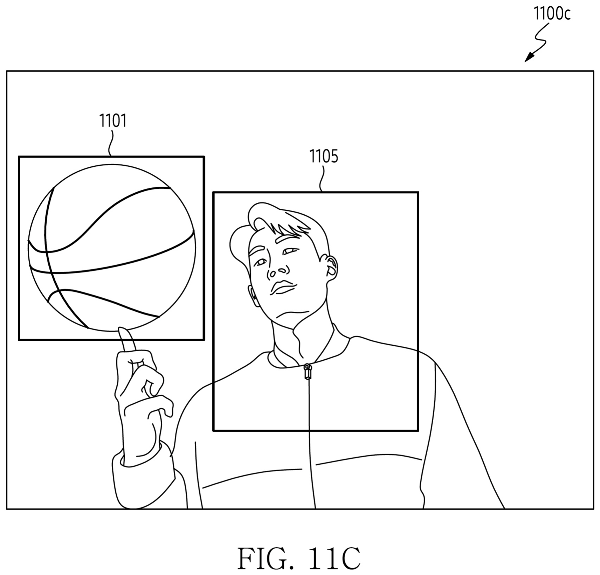

Referring to FIG. 11C, a screen 1100c indicate ROIs to be displayed. For example, the electronic device 101 may identify the first ROI 1101 and the third ROI 1105 among the first ROI 1101, the second ROI 1103, and the third ROI 1105. The electronic device 101 may display the first ROI 1101 and the third ROI 1105.

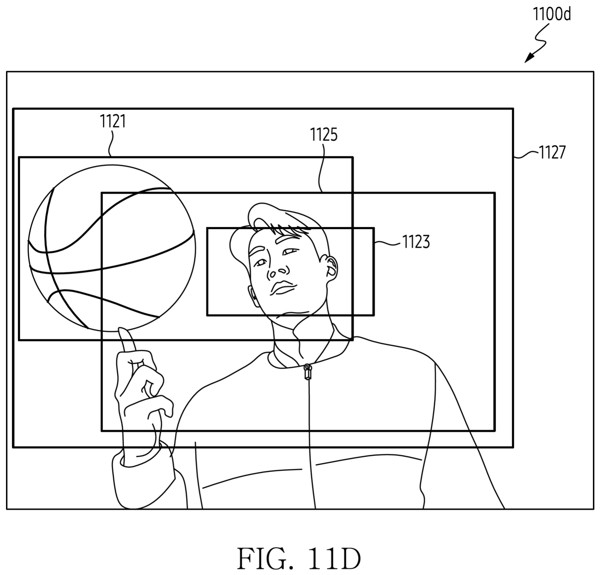

Referring to FIG. 11D, a screen 1100d indicates the display ROI. For example, the display ROI may indicate a region that may be displayed when the ROI is enlarged through the user input to the ROI in the electronic device 101. The electronic device 101 may operate in a landscape mode (e.g., the second state 936b). For example, in the landscape mode, the aspect ratio of the display region of the electronic device 101 may be 16:9. To correspond to the ratio in the landscape mode, the electronic device 101 may obtain a fourth display ROI 1121, a fifth display ROI 1123, and a sixth display ROI 1125. The fourth display ROI 1121 may include the first ROI 1101. The fifth display ROI 1123 may include the second ROI 1103. The sixth display ROI 1125 may include the third ROI 1105. The fifth display ROI 1123 and the sixth display ROI 1125 may overlap. Due to the overlapping, the electronic device 101 may merge the fifth display ROI 1123 and the sixth display ROI 1125. For example, the electronic device 101 may display only the sixth display ROI 1125 except for the fifth display ROI 1123. The fourth display ROI 1121 and the fifth display ROI 1125 may overlap. Due to the overlapping, the electronic device 101 may merge the fourth display ROI 1121 and the sixth display ROI 1125. For example, the electronic device 101 may generate an ROI 1127 including the fourth display ROI 1123 and the sixth display ROI 1125. The electronic device 101 may display the generated ROI 1127 through the display.

In FIGS. 11A to 11D, examples of the selection or the coupling between ROIs in an image region have been described. Not only determining a degree of overlapping between the ROIs, but also determining a degree of overlapping between the ROI and the display region may be understood as an embodiment of the present disclosure. For example, an entire image may be displayed through the display region. When a ratio of the display ROI to the display ROI is greater than the threshold value, the electronic device 101 may control to refrain from displaying the specific ROI.

In embodiments, an electronic device is provided. The electronic device may include memory storing instructions, at least one processor, and a display. The instructions may cause, when executed by the at least one processor, the electronic device to obtain a second image based on an image processing on a first image. The instructions may cause, when executed by the at least one processor, the electronic device to obtain a plurality of regions of interest (ROIs) based on the first image. The instructions may cause, when executed by the at least one processor, the electronic device to identify a first ROI among the plurality of ROIs based on an arrangement for the plurality of ROIs. The instructions may cause, when executed by the at least one processor, the electronic device to display, through the display, a first portion of the first image and a second portion of the second image based on the first ROI among the plurality of ROIs.

According to an embodiment, the instructions may cause, when executed by the at least one processor, the electronic device to obtain one or more objects included in the first image. The instructions may cause, when executed by the at least one processor, the electronic device to obtain the plurality of ROIs based on the obtained one or more objects.

According to an embodiment, the plurality of ROIs may be arranged based on a frequency of each object of the one or more objects within a plurality of images stored in the electronic device. The frequency of each object may indicate the number of times that a corresponding object is included in the plurality of images stored in the electronic device.

According to an embodiment, the instructions may cause, when executed by the at least one processor, the electronic device to identify an object category based on a frequency of each object, and obtain the one or more objects based on the object category. The frequency of each object may indicate the number of times that a corresponding object is included in the plurality of images stored in the electronic device.

According to an embodiment, the plurality of ROIs may be arranged based on an order of a difference degree for the image processing. The difference degree for the image processing may indicate a difference between a first image portion associated with a corresponding ROI within the first image and a second image portion associated with the corresponding ROI within the second image.

According to an embodiment, the plurality of ROIs may be arranged based on a designated algorithm. The designated algorithm may include a shortest path algorithm that uses each ROI of the plurality of ROIs as a node.

According to an embodiment, the image processing may include an adjustment of at least one of brightness, a color, or a resolution of the first image. The plurality of ROIs may be obtained based on positions of pixels of which at least one of the brightness, the color, or the resolution is adjusted according to the image processing.

According to an embodiment, the plurality of ROIs may be obtained based on a difference between pixels of the first image and pixels of the second image.

According to an embodiment, the instructions may cause, when executed by the at least one processor, the electronic device to obtain a first candidate ROI based on the difference between the pixels of the first image and the pixels of the second image. The instructions may cause, when executed by the at least one processor, the electronic device to obtain a second candidate ROI associated with one of one or more objects included in the first image. The instructions may cause, when executed by the at least one processor, the electronic device to obtain an ROI including both the first candidate ROI and the second candidate ROI.

According to an embodiment, the plurality of ROIs may be obtained based on a saliency detection for separating one or more objects included in the first image from a background region of the first image.

According to an embodiment, the first image may be associated with a predicted frame (P-frame) among a plurality of frames. The plurality of ROIs may be identified based on data included in the P-frame.

According to an embodiment, the instructions may cause, when executed by the at least one processor, the electronic device to display, through the display, a dividing line for distinguishing the first portion of the first image and the second portion of the second image, and a visual object for controlling the dividing line. The dividing line may be displayed across the first ROI among the plurality of ROIs. The visual object may be displayed on the dividing line.

According to an embodiment, the instructions may cause, when executed by the at least one processor, the electronic device to display a visual object for each ROI of the plurality of ROIs through the display. The instructions may cause, when executed by the at least one processor, the electronic device to display, based on a user input on a visual object for the first ROI, the first ROI through the display.

According to an embodiment, the instructions may cause, when executed by the at least one processor, the electronic device to, based on identifying that an aspect ratio of the display region of the display is changed, obtain an image region according to the changed aspect ratio and a second ROI associated with the first ROI. The image region may indicate an entire region for the first image and the second image. The instructions may cause, when executed by the at least one processor, the electronic device to display, through the display, the image region in a case that the second ROI is included in the image region. The instructions may cause, when executed by the at least one processor, the electronic device to display, through the display, the second ROI in a case that the second ROI is not all included in the image region.

According to an embodiment, the instructions, when executed by the at least one processor, may cause the electronic device to identify a first region and a second region in the image region based on a first ROI. The first portion of the first image may correspond to the first region among the image region.

The second portion of the second image may correspond to the second region among the image region.

In embodiments, a non-transitory computer-readable medium is provided. The non-transitory computer-readable medium may include a memory storing the instructions. The instructions may cause, when executed by at least one processor, an electronic device to obtain a second image based on an image processing on a first image, obtain a plurality of regions of interest (ROIs) based on the first image, identify a first ROI among the plurality of ROIs based on an arrangement for the plurality of ROIs, and display, through the display, a first portion of the first image and a second portion of the second image based on the first ROI among the plurality of ROIs.

According to an embodiment, the plurality of ROIs may be arranged based on a frequency of each object of the one or more objects within a plurality of images stored in the electronic device. The frequency of each object may indicate the number of times that a corresponding object is included in the plurality of images stored in the electronic device.

According to an embodiment, the plurality of ROIs may be arranged based on an order of a difference degree for the image processing. The difference degree for the image processing may indicate a difference between a first image portion of the first image corresponding to a corresponding ROI and a second image portion of the second image corresponding to the corresponding ROI.

According to an embodiment, the plurality of ROIs may be obtained based on a difference between pixels of the first image and pixels of the second image and the one or more objects.

According to an embodiment, the instructions may cause, when executed by the at least one processor, the electronic device to identify an object category based on a frequency of each object, and obtain the one or more objects based on the object category. The frequency of each object may indicate the number of times that a corresponding object is included in the plurality of images stored in the electronic device.

In embodiments, a method performed by an electronic device, the method may include obtaining a second image based on an image processing on a first image. The method may include obtaining a plurality of regions of interest (ROIs) based on the first image. The method may include identifying a first ROI among the plurality of ROIs based on an arrangement for the plurality of ROIs. The method may include displaying, through a display, a first portion of the first image and a second portion of the second image based on the first ROI among the plurality of ROIs.

In embodiments, a method performed by an electronic device is provided. The method may include obtaining a second image based on an image processing on a first image. The method may include obtaining one or more regions of interest (ROIs) based on one or more objects included in the first image. The method may include displaying, through a display, a first portion of the first image and a second portion of the second image based on a first ROI among the one or more ROIs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
memory storing instructions;
at least one processor; and
a display,
wherein the instructions cause, when executed by the at least one processor, the electronic device to:
obtain a second image based on an image processing on a first image;
obtain a plurality of regions of interest (ROIs) based on the first image;
identify a first ROI among the plurality of ROIs based on an arrangement for the plurality of ROIs; and
display, through the display, a first portion of the first image and a second portion of the second image based on the first ROI among the plurality of ROIs.

2. The electronic device of claim 1,
wherein the instructions cause, when executed by the at least one processor, the electronic device to:
obtain at least one object included in the first image; and
obtain the plurality of ROIs based on the obtained at least one object.

3. The electronic device of claim 2,
wherein the plurality of ROIs are arranged based on a frequency of each object of the at least one object within a plurality of images stored in the electronic device, and
wherein the frequency of each object indicates the number of times that a corresponding object is included in the plurality of images stored in the electronic device.

4. The electronic device of claim 2,
wherein the instructions cause, when executed by the at least one processor, the electronic device to:
identify an object category based on a frequency of each object; and
obtain the at least one object based on the object category, and
wherein the frequency of each object indicates the number of times that a corresponding object is included in the plurality of images stored in the electronic device.

5. The electronic device of claim 1,
wherein the plurality of ROIs are arranged based on an order of a difference degree for the image processing, and
wherein the difference degree for the image processing indicates a difference between a first image portion associated with a corresponding ROI within the first image and a second image portion associated with the corresponding ROI within the second image.

6. The electronic device of claim 1,
wherein the image processing comprises an adjustment of at least one of brightness, a color, or a resolution of the first image, and
wherein the plurality of ROIs are obtained based on positions of pixels of which at least one of the brightness, the color, or the resolution is adjusted according to the image processing.

7. The electronic device of claim 1,
wherein the plurality of ROIs are obtained based on a difference between pixels of the first image and pixels of the second image.

8. The electronic device of claim 7,
wherein the instructions cause, when executed by the at least one processor, the electronic device to:
obtain a first candidate ROI based on the difference between the pixels of the first image and the pixels of the second image;
obtain a second candidate ROI associated with one of at least one object included in the first image; and
obtain an ROI including both the first candidate ROI and the second candidate ROI.

9. The electronic device of claim 1, wherein the plurality of ROIs are obtained based on a saliency detection for separating at least one object included in the first image from a background region of the first image.

10. The electronic device of claim 1,
wherein the first image is associated with a predicted frame (P-frame) among a plurality of frames, and
wherein the plurality of ROIs are identified based on data included in the P-frame.

11. The electronic device of claim 1,
wherein the instructions cause, when executed by the at least one processor, the electronic device to display, through the display:
a dividing line for distinguishing the first portion of the first image and the second portion of the second image; and
a visual object for controlling the dividing line,
wherein the dividing line is displayed across the first ROI among the plurality of ROIs, and
wherein the visual object is displayed on the dividing line.

12. The electronic device of claim 1,
wherein the instructions cause, when executed by the at least one processor, the electronic device to:
display a visual object for each ROI of the plurality of ROIs through the display; and
display, based on a user input on a visual object for the first ROI, the first ROI through the display.

13. The electronic device of claim 1,
wherein the instructions cause, when executed by the at least one processor, the electronic device to:
based on identifying that an aspect ratio of the display region of the display is changed, obtain an image region according to the changed aspect ratio and a second ROI associated with the first ROI, wherein the image region indicates an entire region for the first image and the second image;
display, through the display, the image region in a case that the second ROI is included in the image region; and
display, through the display, the second ROI in a case that the second ROI is not all included in the image region.

14. A non-transitory computer-readable medium, comprising:
memory storing the instructions,
wherein the instructions cause, when executed by at least one processor, an electronic device to:
obtain a second image based on an image processing on a first image;
obtain a plurality of regions of interest (ROIs) based on the first image;
identify a first ROI among the plurality of ROIs based on an arrangement for the plurality of ROIs; and
display, through the display, a first portion of the first image and a second portion of the second image based on the first ROI among the plurality of ROIs.

15. A method performed by an electronic device, the method comprising:
obtaining a second image based on an image processing on a first image;
obtaining a plurality of regions of interest (ROIs) based on the first image;
identifying a first ROI among the plurality of ROIs based on an arrangement for the plurality of ROIs; and
displaying, through a display, a first portion of the first image and a second portion of the second image based on the first ROI among the plurality of ROIs.
